# EUROPEAN PATENT APPLICATION

(11) **EP 4 654 047 A1**
(43) Date of publication of application: **26.11.2025**
(21) Application number: 23929931.6
(22) Date of filing: 06.11.2023
(51) Int. Cl.: G06F 18/21, G06F 18/25

(54) **METHOD AND APPARATUS APPLYING MULTIMODAL ARTIFICIAL INTELLIGENCE**

(30) Priority: 29.03.2023 CN 202310321293
(71) Applicant: Beijing Goose Factory Technology Co. Ltd., Beijing 100080 (CN)
(72) Inventor: ZHENG, Xin, Beijing 100080 (CN)
(74) Representative: You Patent
(86) International application number: PCT/CN2023/130013
(87) International publication number: WO 2024/198361

(57) **Abstract**

Multimodal Large Language Models (LLMs) have emerged as a significant breakthrough in enhancing societal productivity. For instance, multimodal LLMs such as OpenAI's GPT-4.0 are expanding their multifaceted information interaction modalities, encompassing forms such as text, speech, images, and video. These powerful LLMs are anticipated to continuously evolve and improve. Rapidly leveraging the capabilities of these LLMs to further improve societal productivity has become a crucial research direction across various fields. A primary objective of LLMs is to process diverse tasks using a unified model or framework. Consequently, in application domains, the development of more versatile methods to harness the features and capabilities of multimodal LLMs is of substantial value. For humans, display devices represent the primary means of obtaining information from electronic devices, enabling various systems to increasingly adapt to human habits. If artificial intelligence can acquire a comparable volume of information from display devices as humans do, utilizing LLMs, it will significantly expand Al application domains and could further alleviate human workload.

## Description

### TECHNICAL FIELD

The present disclosure relates to the field of multimodal Large Language Models (LLMs), and more particularly, to a method and an apparatus for applying multimodal artificial intelligence utilizing multimodal LLMs.

### BACKGROUND ART

Multimodal Large Language Models (LLMs) have become a significant breakthrough in enhancing societal productivity. For example, multimodal LLMs such as OpenAI's GPT-4.0 are expanding their multiple information interaction modalities, covering various forms like text, speech, images, and video. These powerful LLMs are expected to continuously develop and enhance in the future. How to rapidly apply the capabilities of these LLMs to further improve societal productivity has become an important research direction in different fields. The main purpose of LLMs is to process different tasks using a unified model or framework. Therefore, in application domains, developing more general methods to utilize the characteristics and capabilities of multimodal LLMs is considered highly valuable work.

Humans primarily obtain information from electronic devices through display devices. These display devices enable various systems to increasingly adapt to human habits. If artificial intelligence, leveraging multimodal LLMs, could acquire a comparable volume of information from display devices as humans do, it would greatly enrich the application areas of AI and could further reduce human workload.

### SUMMARY OF THE DISCLOSURE

In view of the foregoing, an objective of the present disclosure is to provide a method and an apparatus for enabling more versatile artificial intelligence applications by utilizing display information as a primary input for a multimodal Large Language Model (LLM).

To achieve this objective, embodiments of the present disclosure utilize a multimodal LLM as a central information processing hub. This LLM is capable of receiving multiple information modalities, including but not limited to images, video, audio, and text.

Input information for the multimodal LLM may include:
Readable display information designed for human use in existing human-oriented devices, typically information displayed on a monitor. Additionally, the input information can include human voice information and audio information output by a device.

Furthermore, it is necessary to specify tasks to be executed by the LLM upon receiving the input information, as well as a format of output information and a location for the output information. This location for the output information can be an explicitly provided parameter, or it can correspond to a pre-configured or default location (e.g., a specific server path for later retrieval by an application, or direct push to the application).

Output information from the multimodal LLM may include:
After completing the required tasks, task results are outputted in the specified format and at the specified location. The task results may include, but are not limited to, text sequences, images, video, or audio. The output data results are transmitted to a location designated by an application, including but not limited to a cloud space, a server, or a client, for subsequent further processing and display.

Specific steps for implementing the method may include:
S1: Extracting information from a display device. The information is typically extracted from a frame buffer of the display device, or a window (surface) of an application after being rendered by an operating system, or a related equivalent location.
S2: Transmitting the information in real-time to the LLM at a specified sampling frequency, while concurrently specifying task requirements, a data format, and an output location for the interaction with the LLM. The act of specifying the output location ensures that the destination for the LLM's output for that transaction is definite, whether that location was determined from direct input for the current transaction, an application configuration, or a system default.
S3: Based on the specified output location, the LLM returns information, which then awaits further processing by an application or a system.

It should be noted that the returned information may be stored in the cloud or on a remote server, awaiting retrieval by the application, or the returned information can be directly pushed to the application or system, which is the default location.

To further enhance the usability of the Al system according to embodiments of the method, the application mentioned in step S3 can be uniformly abstracted as a control application. This control application can perform human-like operations on the system based on the information returned by the LLM, partially or entirely replacing human operation.

S4: Converting control-related text sequences returned by the LLM into control instructions via a control instruction translator, thereby performing human-like operations on the system. For example, if the text sequence returned by the LLM is "click screen position (200, 210)," the control instruction translator converts this text sequence into a call for a system click operation at coordinates (200, 210). Operation types include, but are not limited to, a click, a long press, and a swipe. The control instruction translator can also directly input a segment of text, an image, audio information, etc., into the system in a manner mimicking human input.

S5: The control instruction translator can schedule operations for instructions, for instance, for future execution such as turning off a lamp after 30 seconds. The control instruction translator can also perform operations such as adding, modifying, or deleting scheduled content.

S6: The input information for the LLM may further include user voice task requirements or audio output from a system audio device. Audio can be uploaded using a streaming mode.

S7: To improve system efficiency, the sampling frequency or resolution of the display device can be appropriately adjusted based on task requirements and system resources, or lossy compression can be applied to images. For example, if the display screen shows no pixel changes for a period, processing may be skipped for that period.

S8: System efficiency and security can also be enhanced by selecting and transmitting only a specified region of an image portion to the LLM for processing, for example, processing only information in an upper half of the screen.

S9: Certain human operations can have a guiding effect and can change an attention of the LLM. Therefore, records of such human operations can also be recorded and sent to the LLM for concurrent processing.

An apparatus for applying multimodal artificial intelligence, as disclosed herein, comprises the following modules:
D1: A display information acquisition module, configured to acquire display images at a specified frequency, with a specifiable image collection area, the images extracted from a frame buffer of a display device or a rendered application window.
D2: An application storage module, configured to store task description information, format requirements for returned information, and location requirements for the returned information (which may include default or pre-configured locations).
D3: An LLM input module, which is an input interface for a multimodal LLM, configured to combine information from module D1 and module D2 and input the combined information to the LLM.
D4: An LLM output module, configured to receive information output by the LLM and place the output information into a specified location according to the location requirements stored in module D2.
D5: An application processing module, configured to retrieve information from the location specified by module D4 and organize it for display.

Optional modules may also include:
D6: A control instruction translator module, configured to convert control-related text sequences within the output information received by module D4 into system control instructions, including but not limited to a click, a long press, a swipe, and a text input. The control instruction translator module can also schedule instructions for timed execution.
D7: A voice acquisition module, configured to store user voice commands in module D2, and to directly output audio originally produced by an audio device of the system to module D3.

The method and apparatus, as described in embodiments herein, may offer the following advantages:
Enabling more comprehensive and rapid application of multimodal LLM capabilities, potentially using a single system rather than requiring separate development for each application.

Greatly enriching input information for multimodal LLMs by integrating display content, allowing for more powerful interactions with AI compared to voice-only operations.

Enabling a closer simulation of human behavior, thereby approaching the capabilities of a personal assistant.

To some extent, potentially reducing risks of information leakage, as the described system may process only displayed portions of information, unlike some existing applications that might send all information to LLM systems.

The system can also be integrated into hardware products, such as smart televisions.

### BRIEF DESCRIPTION OF THE DRAWINGS

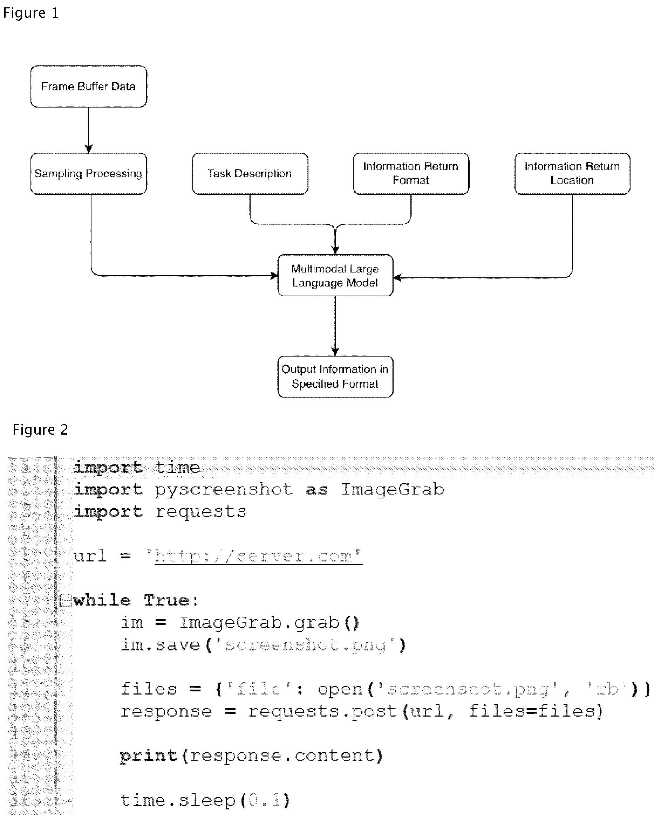

FIG. 1 illustrates a basic logic diagram of a method according to an embodiment of the present disclosure.
FIG. 2 provides example code for sampling a frame buffer and uploading data to an LLM, according to an embodiment of the present disclosure.

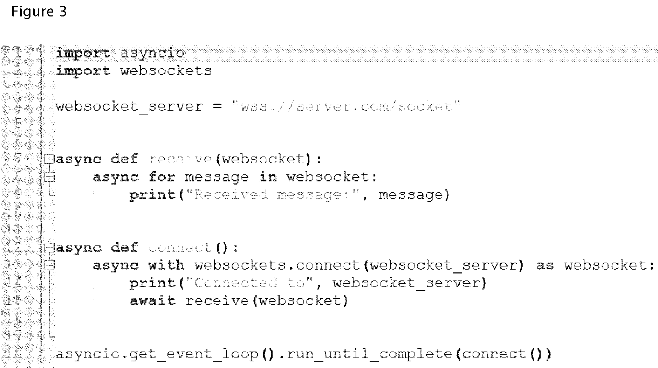

FIG. 3 provides example code for an LLM returning information via a WebSocket protocol, according to an embodiment of the present disclosure.

### DETAILED DESCRIPTION OF EMBODIMENTS

In an exemplary embodiment, an image is captured from a device's frame buffer at regular intervals and transmitted to a multimodal Large Language Model (LLM).

Concurrently, task requirements, a data format, and an output location for returned information are specified. The returned information is pushed directly to an application, or to a location from which the application can retrieve it. After the application obtains the returned information from the LLM, it performs further processing and operations.

A typical processing scenario involves the LLM returning a control-related text sequence, for example, "click screen position (200, 210)." This sequence is then translated by a control instruction translator into a system click operation, i.e., clicking the screen at coordinates (200, 210). Such operations can, of course, be scheduled for timed execution, for instance, an operation to turn off a desk lamp after 30 seconds.

Information collected on the device can also originate from an audio module of the device and be provided as input to the LLM.

## Claims

1. A method for applying multimodal artificial intelligence, comprising:
inputting, to a multimodal Large Language Model (LLM), first information, wherein the first information comprises: human-readable display information, a task to be executed, a format for output information, and location information for the output information; and
outputting, from the multimodal LLM, second information, wherein the second information satisfies: task requirements, format requirements, and location requirements;
wherein the method comprises the steps of:
S1: extracting display information from a display device, wherein the display information is extracted from a frame buffer of the display device or from a window of an application rendered by an operating system;
S2: transmitting the display information to the LLM in real-time at a specified sampling frequency, while concurrently specifying the task to be executed, the format for the output information, and the output information location for the interaction with the LLM; and
S3: receiving, from the LLM, the second information at the specified output information location, wherein the second information awaits further processing by an application or a system.

2. The method of claim 1, wherein the further processing comprises:
utilizing a control instruction translator to convert a control-related text sequence within the second information into at least one control instruction; and
performing a human-like operation on the system using the at least one control instruction.

3. The method of claim 2, wherein the control instruction translator is configured to:
schedule the at least one control instruction for execution; and
perform at least one of adding, modifying, or deleting scheduled content associated with the scheduled control instruction(s).

4. The method of claim 1, wherein the first information input to the LLM further comprises at least one of: a user voice task requirement or audio output from an audio device of the system.

5. The method of claim 1, further comprising:
reducing the specified sampling frequency based on the task requirements and system resources; and
refraining from processing the display information if no pixel change occurs in the display information for a predetermined period.

6. The method of claim 1, further comprising:
selecting a specified region of an image portion of the display information; and
transmitting the selected specified region of the image portion to the LLM for processing.

7. The method of claim 1, further comprising:
transmitting records of human operations to the LLM.

8. An apparatus for applying multimodal artificial intelligence, comprising:
D1: a display information acquisition module configured to acquire a display image from a display device at a specified frequency, wherein the display image is extracted from a frame buffer of the display device or from a window of an application rendered by an operating system, and wherein an area for image acquisition is specifiable;
D2: an application storage module configured to store: description information of a task to be implemented, format requirements for returned task information, and location requirements for the returned information;
D3: an LLM input module, comprising an input interface of a multimodal Large Language Model (LLM), configured to combine the display image from the display information acquisition module (D1) and information from the application storage module (D2), and input the combined information to the LLM;
D4: an LLM output module configured to receive output information from the LLM and place the output information at a specified location based on the location requirements for the returned information stored in the application storage module (D2); and
D5: an application processing module configured to retrieve the output information placed by the LLM output module (D4), and to organize and display the retrieved output information.

9. The apparatus of claim 8, further comprising:
D6: a control instruction translator module configured to convert a control-related text sequence within the output information received by the LLM output module (D4) into at least one system control instruction, wherein the at least one system control instruction comprises at least one of: a click, a long press, a swipe, or a text input, and wherein the control instruction translator module is further configured to schedule execution of the at least one system control instruction; and
D7: a voice acquisition module configured to store a user voice command in the application storage module (D2) and to directly output audio originally produced by an audio device of the system to the LLM input module (D3).
